Europäisches Patentamt

European Patent Office

Office européen des brevets

(11) Publication number: **0 136 041**
**B1**

(12) **EUROPEAN PATENT SPECIFICATION**

(45) Date of publication of patent specification: **25.01.89**

(51) Int. Cl.⁴: **G 11 B 7/26**

(21) Application number: **84305616.9**

(22) Date of filing: **17.08.84**

(54) Optical memory disc.

(30) Priority: **18.08.83 JP 151009/83**

(43) Date of publication of application:
**03.04.85 Bulletin 85/14**

(45) Publication of the grant of the patent:
**25.01.89 Bulletin 89/04**

(84) Designated Contracting States:
**DE FR GB IT**

(56) References cited:
**EP-A-0 026 880**
**EP-A-0 038 499**
**GB-A-2 009 996**
**PATENT ABSTRACTS OF JAPAN, vol. 7, no.
134, 11 June 1983; & JP-A-58-50636 (HITACHI
SEISAKUSHO K.K.) 25-03-1983**
**PATENT ABSTRACTS OF JAPAN, vol. 6, no.
217, 30th October 1982; & JP-A-57-120243
(MATSUSHITA DENKI SANGYO K.K.) 27-07-
1982**
**PATENT ABSTRACTS OF JAPAN, vol. 5, no. 69,
9th May 1981; & JP-A-56-19532 (TOKYO
SHIBAURA DENKI K.K.) 24-02-1981**

(73) Proprietor: **SHARP KABUSHIKI KAISHA
22-22 Nagaike-cho Abeno-ku
Osaka 545 (JP)**

(72) Inventor: **Ohta, Kenji
Shiki Mansion 414 89-1 Ooaza-Futamata
Yao-shi Osaka-fu (JP)**
Inventor: **Takahashi, Akira
9-1-506 Akishino Hayatsuki-cho
Nara-shi Nara-ken (JP)**
Inventor: **Inui, Tetsuya
14 Inyou-cho
Nara-shi Nara-ken (JP)**
Inventor: **Hyuga, Takao
60-2 Loaza-Tonoshiro Ooaza-Kizu
Kizu-cho Soraku-gun Kyoto-fu (JP)**
Inventor: **Yamaoka, Hideyoshi
2-5-21 Amaminishi
Matsubara-shi Osaka-fu (JP)**

(74) Representative: **Wright, Peter David John et al
R.G.C. Jenkins & Co. 26 Caxton Street
London SW1H 0RJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an optical memory disc, to which a laser beam is inpinged to record, read out or erase the information onto or from the optical memory disc.

There has recently been developed an optical memory system which is capable of mass storage of information optically in high density. In the optical memory system of the add-on-memory type or the erasable memory type, guide signals of guide addresses are normally recorded on the optical memory disc along concentric circular guide grooves or along a spiral guide groove so as to control the optical beam position. In order to ensure an accurate operation, the concentricity of the circular guide grooves (spiral groove) and the centre of rotation of the optical memory disc must be maintained with high accuracy. If the rotation center of the optical memory disc is displaced from the centre of the circular guide grooves (spiral groove), the tracking operation becomes difficult because of the orbiting of the disc.

The present invention aims to provide an optical memory disc in which the above-noted problems are alleviated.

JP—A—5850636 discloses an optical memory disc having two disc-shaped substrates secured together, and respective central centering rings adhered to the substrates.

The optical memory disc of the present invention is an improvement on this structure, and comprises an optical memory disc comprising a substrate (24) having a plurality of concentric circular grooves (26) or a spiral groove, formed thereon, a recording medium (28) disposed on said substrate and centering means (460, 462) provided at the centre of the disc and defining an axis of rotation of the disc, characterised in that said centering means is secured to the substrate by means of a photo-polymer which has been cured by ultraviolet radiation (62, 64) after relative positioning of the substrate and the centering device to locate said axis substantially centrally of the groove or grooves, and in that said centering means is formed with at least one portion (60) for transmitting ultraviolet radiation for application to said photopolymer.

The disc of the present invention, as defined above, therefore facilitates the positioning and securing of the centering means.

The present invention will be better understood from the detailed description given hereinbelow and the accompanying drawings, which are given by way of illustration of the invention only.

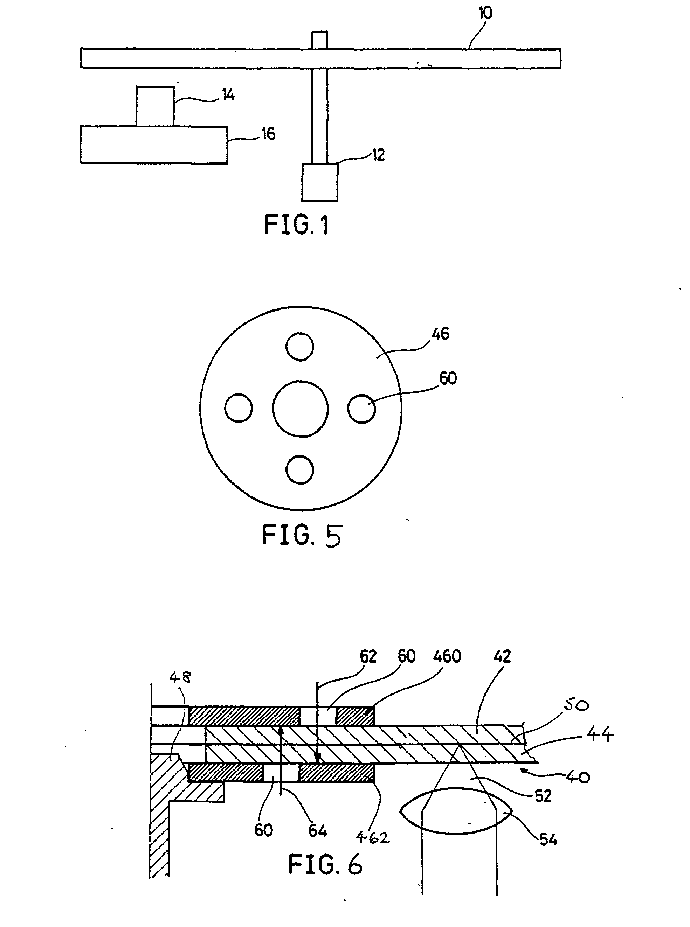

Figure 1 is a schematic sectional view of an optical disc memory system;

Figure 2 is a partially cut-away perspective view of the conventional optical memory disc;

Figure 3 is an enlarged sectional view of a portion III of the optical memory disc of Figure 2;

Figure 4 is a partially cut-away perspective view showing the basic components of an optical memory disc to which the present invention is applicable, but omitting features of the centering means;

Figure 5 is a plan view of an embodiment of the centering means to be employed in the optical memory disc of Figure 4; and

Figure 6 is a sectional view for explaining the manufacture of the optical memory disc of Figure 4 using the centering means of Figure 5.

Description of the Preferred Embodiments

An optical disc memory system generally includes an optical memory disc 10, a motor 12 for rotating the optical memory disc 10, an optical pickup 14, and a tracking mechanism 16 for shifting the optical pickup 14 in the radial direction. The optical pickup 14 includes a laser beam source, a lens system, a servo system for tracking/focusing purposes, and a beam direction system disposed therein.

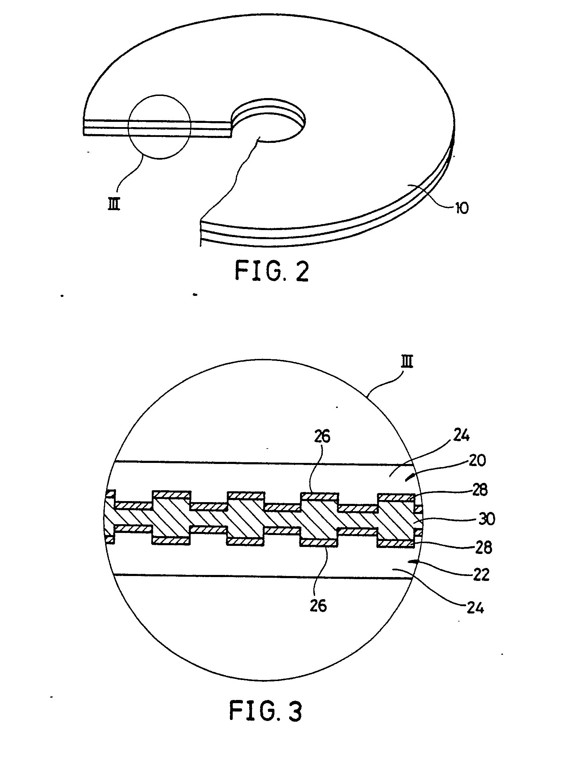

The optical memory disc 10 generally has the double-sided structure, as shown in Figures 2 and 3, so as to increase the disc memory capacity. More specifically, the optical memory disc 10 generally includes a pair of recording plates 20 and 22. Each of the recording plates 20 and 22 includes a transparent substrate 24, guide grooves 26 formed in the transparent substrate 24, and recording medium 28 disposed on the transparent substrate 24. The two recording plates 20 and 22 are attached to each other through the use of adhesive 30 in a manner that the recording medium 28 of the respective recording plates 20 and 22 confronts each other.

The guide grooves 26 are important for the optical memory disc of the add-on-memory type and the erasable memory type for conducting the tracking servo operation. The guide grooves include a plurality of concentric circular grooves or a spiral groove formed in the transparent substrate 24. The guide grooves are formed in 1.5 through 3 μm pitch, and each groove has a width of 0.7 through 1 μm, and a depth of (50 nm (500 Å) through 80 nm (800 Å). If the center of the guide grooves 26 is displaced from the center of the rotation of the optical memory disc 10, an accurate tracking operation can not be conducted.

Several methods have been proposed to form the guide grooves in the optical memory disc.

1) A stamper having the stripe-shaped grooves formed thereon is employed to transcribe the stripe-shaped grooves onto a resin substrate made of, for example, acrylic or polycarbonate, through the use of the injection molding method.

2) Photo-polymer is interposed between a grooved stamper and a substrate so as to transcribe the stripe-shaped grooves onto the photopolymer. The stamper is removed after the photo-polyer is cured (namely, 2P method).

3) Resist is disposed on a glass substrate so as to transcribe the stripe-shaped grooves onto the resist. Then, the guide grooves are formed on the glass substrate by conducting the etching operation through the resist.

The third method is described in detail in copending European Patent Application No: 84303176.6.

Even though a high concentricity is maintained in the concentric guide grooves in the conventional optical memory disc, there is a possibility that the center of the rotation of the optical memory disc is displaced from then center of the concentric guide grooves.

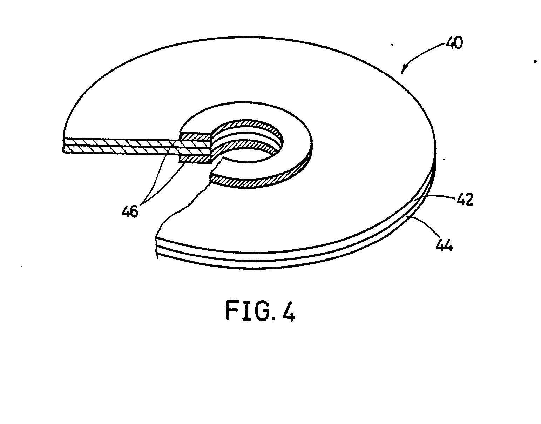

Therefore it is proposed to enhance the concentricity between the center of the guide grooves and the center of the rotation of the optical memory disc. Figure 4 shows an embodiment of an optical memory disc having centering means for enhancing the concentricity between the center of the guide grooves and the center of the rotation of the optical memory disc.

An optical memory disc 40 has the same construction as the optical memory disc 10 of Figures 2 and 3. That is, the optical memory disc 40 includes two glass substrates 42 and 44. A centering means 46 consisting of two centering devices 460, 462 is secured to the glass substrate 42 and 44 while observing the concentricity of the guide grooves through the glass substrate 42 and 44.

Figure 6 shows a method for securing the centering device 46 to the glass substrates 42 and 44. The optical memory disc 40 including centering devices 460, 462 is mounted on a centering turntable 48. The guide grooves formed on the recording surface 50 of the glass substrates 42 and 44 are observed by impinging a laser beam 52 through the use of an object lens 54. The glass substrates 42 and 44 are rotated on the centering turntable 48 and the location of the glass substrates 42 and 44 is adjusted so that the center of the guide grooves formed on the glass substrates 42 and 44 becomes identical with the center of the rotation of the glass substrates 42 and 44. Then, the centering devices 460, 462 are secured to the glass substrates 42 and 44.

A photo-polymer adhesive is employed to secure the centering devices 462, 464 to the glass substrates 42 and 44, the adhesive being first disposed between the centering devices 460, 462 and the glass substrates 42 and 44 before the optical memory disc is mounted on the centering turntable 48.

This use of a photo-polymer permits the centering operation to be performed quickly. A plurality of light transmitting apertures 60 are formed in the centering device 46 as shown in Figure 5. When the ultraviolet ray 62 is applied through the light transmitting aperture 60 formed in a centering device 460 as shown in Figure 6, the ultraviolet ray 62 reaches the inner surface of the opposing centering device 462 through the glass substrates 42 and 44 so as to fix the centering device 462 to the glass substrate 44.

Further, the ultraviolet ray 64 is applied through the light transmitting aperture 60 formed in the centering device 462 so as to secure the centering device 460 to the glass substrate 42. Of course, the recording medium should not be disposed on the glass substrates 42 and 44 at the position where the ultraviolet rays 62 and 64 pass.

The light transmitting apertures 60 can be formed at desired positions in a desired configuration. In a preferred form, the light transmitting apertures are shaped in a symbol pattern showing the manufacturer of the optical memory disc. In a preferred form, anaerobic photo-polymer is employed as the adhesive. In this case, the anaerobic photo-polymer gradually cures at positions where the ultraviolet rays 62 and 64 are not applied, thereby tightly fixing the centering means 46 to the glass substrates 42 and 44.

The centering means 46 (460 and 462), further, functions to protect the center opening edge of the glass substrates 42 and 44. The diameter of the center opening of the centering devices 460 and 462 must be smaller than the diameter of the center opening of the glass substrates 42 and 44.

In case the turntable for the optical memory disc is the magnetic attracting type, the centering devices can be made of ferromagnetic material such as iron. Ni or Cu is preferably plated on the iron centering device in order to prevent the rust.

## Claims

1. An optical memory disc comprising a substrate (24) having a plurality of concentric circular grooves (26) or a spiral groove, formed thereon, a recording medium (28) disposed on said substrate and centering means (460, 462) provided at the center of the disc and defining an axis of rotation of the disc, characterised in that said centering means is secured to the substrate by means of a photo-polymer which has been cured by ultraviolet radiation (62, 64) after relative positioning of the substrate and the centering device to locate said axis substantially centrally of the groove or grooves, and in that said centering means is formed with at least one portion (60) for transmitting ultraviolet radiation for application to said photo-polymer.

2. An optical memory disc according to claim 1 characterised in that said substrate is transparent, and said centering means comprises first and second centering members (460, 462) on opposite sides of the disc each formed with one or more said transmitting portion (60), each centering member being positioned so that the ultraviolet light (62, 64) transmitted through its said transmitting portion (60) or portions is effective to cure the photo-polymer for securing the other centering member.

3. An optical memory disc according to claim 1 or claim 2 characterised in that it comprises first and second said substrates (42, 44) secured together back-to-back with their said recording media facing each other.

4. An optical memory disc according to any preceding claim characterised in that said substrate includes a circular central hole and in that said centering means includes a circular central hole of which the centre defines the position of said axis of rotation and of which the diameter is less than that of the central hole of the substrate.

5. An optical memory disc according to any preceding claim characterised in that the or each said transmitting portion is an aperture (60).

6. An optical memory disc according to any preceding claim characterised in that the or each said substrate is made of glass.

7. An optical memory disc according to any preceding claim characterised in that said centering means is made of ferromagnetic material.

8. An optical memory disc according to claim 7 characterised in that said centering means includes a rust-inhibiting coating.

9. An optical memory disc according to claim 8 characterised in that centering means is made of iron coated with Ni or Cu.

10. An optical memory disc according to any preceding claim characterised in that said photo-polymer is an anaerobic photo-polymer.

## Patentansprüche

1. Optische Speicherplatte mit einem Substrat (24) mit einer mit Viezahl konsentrischer kreisförmiger Rillen (26) oder einer darauf gebildeten spiralförmigen Rille, einem auf das Substrat aufgebrachten Aufzeichnungsmedium (28) und einer in der Plattenmitte vorgesehene und die Drehachse der Platte bestimmende Zentriereinrichtung (460, 462) dadurch gekennzeichnet, daß die Zentriereinrichtung mit einem Photopolymer auf dem Substrat befestigt ist, welches nach relativer Ausrichtung des Substrates und der Zentriereinrichtung zur im wesentlichen zentralen Anordnung der Achse zum Mittelpunkt von Rille oder Rillen durch ultraviolette Strahlung (62, 64) ausgehärtet worden ist, und die Zentriereinrichtung derart ausgebildet ist, daß sie mindestens einen Abschnitt (60) aufweist, der die ultraviolette Strahlung zur Anwendung auf das Photopolymer durchläßt.

2. Optische Speicherplatte nach Anspruch 1, dadurch gekennzeichnet, daß das Substrat transparent ist und die Zentriereinrichtung ein erstes und zweites Zentrierteil (460, 462) auf den gegenüberliegenden Seiten der Platte enthält, jedes mit einem oder mehreren durchlässigen Abschnittem (60), wobei jedes Zentrierteil derart angeordnet ist, daß das durch dessen durchlässigen Abschnitt (60) oder Abschnitte durchgehende ultraviolette Licht (62, 64) zur Härtung des Photopolymers zur Befestigung des anderen Zentrierteils wirksam ist.

3. Optische Speicherplatte nach Anspruch 1 oder Anspruch 2, dadurch gekennzeichnet, daß sie ein erstes und zweites Substrat (42, 44) aufweist, die Rücken an Rücken mit ihren Aufzeichnungsmedien einandergegenüberliegend miteinander verbunden sind.

4. Optische Speicherplatte nach einem vorhergehenden Anspruch dadurch gekennzeichnet, daß das Substrat ein kreisförmiges Zentralloch aufweist, und die Zeintriereinrichtung ein kreisförmiges Zentralloch umfaßt, dessen Zentrum die Lage der Drehachse bestimmt und dessen Durchmesser geringer ist als der das Zentralloches des Substrats.

5. Optische Speicherplatte nach einem vorhergehenden Anspruch, dadurch gekennzeichnet, daß der oder jeder durchlässige Abschnitt eine Öffnung (60) ist.

6. Optische Speicherplatte nach einem vorhergehenden Anspruch, dadurch gekennzeichnet, daß das oder jedes Substrat aus Glas hergestellt ist.

7. Optische Speicherplatté nach einem vorhergehenden Anspruch dadurch gekennzeichnet, daß die Zentriereinrichtung aus einem ferromagnetischen Material hergestellt ist.

8. Optische Speicherplatte nach Anspruch 7, dadurch gekennzeichnet, daß die Zentrierevorrichtung eine rostverhindernde Beschichtung aufweist.

9. Optische Speicherplatte nach Anspruch 8, dadurch gekennzeichnet, daß die Zentriereinrichtung aus mit Ni oder Cu beschichtetem Eisen hergestellt ist.

10. Optische Speicherplatte nach einem vorhergehenden Anspruch, dadurch gekennzeichnet, daß das Photopolymer ein anaerobes Photopolymer ist.

## Revendications

1. Disque de mémoire optique comprenant un substrat (24), dans lequel sont formées une pluralité de gorges circulaires concentriques (26) ou une gorge spirale, un support d'enregistrement (28) disposé sur ledit substrat et des moyens de centrage (460, 462) prévus au centre du disque et définissant une axe de rotation de ce dernier, caractérisé en ce que lesdits moyens de centrage sont fixés au substrat à l'aide d'un photopolymère, que l'on a fait durcir au moyen d'un rayonnement ultraviolet (62, 64) après un positionnement relatif du substrat et du dispositif de centrage, servant à positionner ledit axe dans une position essentiellement centrale par rapport à la ou aux gorges, et en que lesdits moyens de centrage comportent au moins une partie (60) servant à la transmission d'un rayonnement ultraviolet en vue de son application audit photopolymère.

2. Disque de mémoire optique selon la revendication 1, caractérisé en ce que ledit substrat est transparent, et que lesdits moyens de centrage comprennent des premier et second éléments de centrage (460, 462) situés sur des faces opposées du disque et comportant ladite partie de transmission (60) ou plusieurs parties de transmission de ce type, chaque élément de centrage étant disposé de manière que la lumière ultraviolette (62, 64) transmise par la ou lesdites parties (60) de transmission de la lumière, que contient cet élément de centrage, provoque un durchissement effectif du photopolymère de manière à fixer l'autre élément de centrage.

3. Disque de mémoire optique selon la revendication 1 ou 2, caractérisé en ce qu'il comprend lesdits premier et second substrats (42, 44) fixés l'un à l'autre dos-à-dios, leurs supports d'enregistrement étant tournés l'un vers l'autre.

4. Dispositif de mémoire optique selon l'une quelconque des revendications précédentes, caractérisé en ce que ledit substrat comporte un trou central circulaire et que lesdits moyens de centrage incluent un trou central circulaire dont le centre définit la position dudit axe de rotation et dont le diamètre est inférieur à celui du trou central du substrat.

5. Disque de mémoire optique selon l'une quelconque des revendications précédentes, caractérisé en ce que la partie de transmission ou chacune desdites parties de transmission est une ouverture (60).

6. Disque de mémoire optique selon l'une quelconque des revendications précédentes, caractérisé en ce que que le substrat ou chacun desdits substrats est réalisé en verre.

7. Disque de mémoire optique selon l'une quelconque des revendications précédentes, caractérisé en ce que lesdits moyens de centrage sont réalisés en un matériau ferromagnétique.

8. Disque de mémoire optique selon la revendication 7, caractérisé en ce que lesdits moyens de centrage incluent un revêtement anti-rouille.

9. Disque de mémoire optique selon la revendication 8, caractérisé en ce que lesdits moyens de centrage sont constitiés par du fer recouvert de Ni ou de Cu.

10. Disque de mémoire optique selon l'une quelconque des revendications précédentes, caractérisé en ce que ledit photopolymère est un photopolymère anaérobie.

FIG. 1

FIG. 5

FIG. 6

FIG. 2

FIG. 3

FIG. 4